# EUROPEAN PATENT APPLICATION

(11) **EP 1 949 797 A1**
(43) Date of publication of application: **30.07.2008**
(21) Application number: 07000371.0
(22) Date of filing: 09.01.2007
(51) Int. Cl.: A23L 1/20, A47J 27/00, A23L 1/211, A23C 11/10

(54) **A bean processing device and a method for using the same**

(71) Applicant: Brasfanta Industria e Comercio Ltda., 04547 006 Sao Paulo (BR)
(72) Inventor: Wang, Shu Liang, Taipei City 106 (TW); Chang, Edson, 05653-030 Sao Paolo (BR)
(74) Representative: UEXKÜLL & STOLBERG

(57) **Abstract**

The present invention is to provide a bean processing device comprising: a first processing tank, which comprises a first pulverizer, the first processing tank is for loading the beans for soaking, cooking and crushing; a second pulverizer, which is applied as a holding tank for the fine crushing of the primary crushed beans from the first processing tank; a second processing tank, which is connected with the second pulverizer, and applied for holding the bean products; and a conjunction pipe, which is applied for connecting the first processing tank and the second pulverizer to form a airtight automatic processing system.

## Description

### BACKGROUND OF THE INVENTION

### 1. Field of the Invention

The present invention relates to a bean processing device and a method for using the same, more particularly, to an airtight automatically manufacturing device for processing the whole bean soybean milk powder and relevant products and a method for using the device.

### 2. Description of Related Art

Soybean is a plant first grown in China and offers high nutritional value. Aside from soy proteins, soybean is also in rich with high-quality phytolipids (plant-based lipids). Shen Nong, an ancient emperor in China honored with the title of "Divine Farmer" listed soy as one of the five grains. Soy was later introduced into Korea, Japan and other Asian countries. H. A. Worvath, the father of American soybean, vigorously promoted soybean as a major crop and turned the United States into a world leading soybean producer.

Soybean is in rich with nutrients, including hormones, proteins, lipids, and vitamins. Take the example of isoflavone, it is a kind of phytohormone known to be associated with the prevention of breast cancer, cervical cancer, osteoporosis, and relieving menopause symptoms. Soy proteins contain a complete array of essential amino acids (e.g. histidine, lysine, leucine, isoleucine, and tryptophan) and no cholesterol, and help prevent cancer, hypertension, cardiovascular diseases, and kidney stones.

In contrast to animal oil or animal protein that mostly contains saturated fatty acids, soy lipids are composed of primarily polyunsaturated fatty acids. The essential fatty acids, including linoleic acid (an omega-6 fatty acid) and α-linolenic acid (an omega-3 fatty acid) contained in soybean can be converted into DHA, EPA or prostaglandin precursor inside the body. Soybean oil also contains proper amount of oleic acid (a mono unsaturated fatty acid), which is not an essential fatty acid, but is known to reduce the level of LDL (low-density lipoprotein) and while increase the level of HDL (high-density lipoprotein). Soybean is also an important source of lecithin, which helps improve memory, promote metabolism and activate cells. Carbohydrates contained in soybean, including soy oligosaccharide, cellulose, semi-cellulose, mannan, and bean gum stimulate the peristalsis of intestines, thereby helping to prevent constipation, eliminate toxins and carcinogens in the intestines and alleviate the burden of liver.

Human body, however, cannot absorb the various nutritious components in soybean, until the soybean has been processed. In fact, the degree of absorption is directly proportional to the extent of processing. For instance, the rate of soy phytoprotein absorption is very low before soybean is processed. The more refined the soybean has been processed, the higher its utilization rate. For example, the digestion rate of protein in roasted soybean is 60%, that of boiled soybean is 68%; that of cooked soymilk is 85%; while the digestion rate of protein in soy jelly, tofu and soy powder is as high as 95%. That is, only nutrients in cooked soy can be absorbed, for some active factors contained in raw soymilk (e.g. trypsin inhibitor, phytohemagglutinin, and phytic acid), despite of their anti-cancer activity, would inhibit the absorption of nutrients or stimulate the mucosa of intestinal tract. But heating or other processes can minimize the activities of those active factors, while retaining the intrinsic effects of soybean.

On the other hand, soybean has a very hard tissue, which makes its digestion-absorption coefficient low even after it is boiled or roasted. This problem is dealt with by crushing soybean into soy slurry or processing it into liquid or powder products after it is steamed, which also make soybean applications convenience. As a result, a variety of soybean processing methods have been introduced.

The general manufacturing method of bean products in the market is to soak the beans in a soaking through for a period of time after washing. Waiting for the beans get soft, then load the softened beans into a cooker and cook for a while. Place the cooked beans into the pulverizer for the primary pulverizing, take out the crushed slurry and place for a while then put the powder back to the pulverizer for another fine pulverizing. However, in this process, the soybeans have to expose into the atmosphere once in each step, which is able to cause the soybean nutrients washed away and oxidized further to influence the product quality. In addition, large amount of okara produced in the process is used typically as animal feed or fertilizer, which leads to a waste of resources. In the bean processing, cells can be separated by enzyme or chemical reagent under high pressure. But cell walls are destroyed in the process that increases the chance of bean cells being oxidized.

Thus it is necessary to develop a soy processing method that can retain the nutrients of whole bean, while prevent the soy cell from oxidation in the process, hence preventing the generation of unpleasant smell.

### SUMMARY OF THE INVENTION

The object of the present invention is to provide a bean processing device and the method thereof, which is applied, under the atmosphere, to perform the soaking, cooking and the crushing process in sequence by an airtight automatic process, in order to effectively decrease the nutrients washed away and to produce a product containing single bean cells. Moreover, it is able to avoid the traditional preparing method of the bean product (for example, soybean milk), which proceeds the soaking, cooking and crushing process in the different tanks, therefore it results in inconvenience and an intensively heavy labor works.

Another object of the present invention is to provide a bean processing device and the method thereof, which is able to make a bean product in liquid or powder form drying afterward. It contains an integrated single bean cell, added it into the food stuff could enhance the nutrients.

To achieve the object, the bean processing device of the present invention comprising: a first processing tank, which comprises a first pulverizer, the first processing tank is for loading beans and for soaking, cooking and crushing the beans; a second pulverizer, which is applied for fine crushing of the crushed beans from the first processing tank; a second processing tank, which is connected with the second pulverizer, and applied as a holding tank to receive the final bean products from the second pulverizer; and a conjunction pipes, which is applied for connecting the first processing tank and the second pulverizer to form a airtight automatic processing system.

Preferably, the bean processing device of the present invention further comprises a hot water tank for preheating the water then delivers the water into the first processing tank to shorten the time in softening the cell tissue of bean and maintains the temperature of the first processing tank and the second processing tank.

Preferably, the hot water tank further comprises a cleaning and sterilizing reagent, which is applied after completion of the producing process for the bean products, to spray at the first processing tank and the second processing tank by a spraying device mounted inside the first processing tank and the second processing tank for the purpose of cleaning and sterilizing.

Preferably, the outside of the first processing tank is equipped with a jacketed heating plate for heating the beans in the first processing tank.

Preferably, the bottom of the first processing tank further installs a pump, the pump circulates the beans from the bottom of the first processing tank up to the top of tank.

Preferably, the first processing tank is equipped with a agitator for stirring while the beans are cooking in the first processing tank.

Preferably, the first pulverizer is mounted at the bottom of the first processing tank for the primary crushing the cooked beans into the slurry.

Preferably, the second processing tank further equips an agitator for stirring the beans inside the second processing tank and a clip heating plate for maintaining a proper temperature of the beans inside the second processing tank.

Preferably, the beans are soybeans.

In order to achieve another object, the present invention provides a bean processing method, which is applied with the above-mentioned device, comprising: (a) loading the beans into a first processing tank; (b) adding the proper amount of the water into the tank to perform the beans soaking, cooking and primary crushing process; (c) transferring the primary crushed beans into the second pulverizer for the fine crushing through a conjunction pipe; and (d) conducting the crushed beans into the second processing tank for stirring and then a bean product with a integrated single cell wall is obtained.

Preferably, the crushing process in the step (b) is performed by the first pulverizer of the first processing tank.

Preferably, the cooking process in the step (b) is performed at a temperature of 70-100°C for 3-6 hours.

Preferably, the bean processing of the present invention further comprises a spray-dried step for drying a liquid bean product into a powder product.

Preferably, the bean processing of the present invention further comprises a CIP ( Cleaning in place ) step, which is performed immediately after completion of the producing process of bean products. The CIP step is performed by adding the cleaning and sterilizing reagent into the hot water tank and then spray the cleaning and sterilizing reagent solution to the first processing tank and the second processing tank for the purpose of the cleaning and sterilizing.

Preferably, the first processing tank and the second processing tank are equipped with an agitator respectively, the agitator is used for stirring the beans in the tank.

Preferably, the bean product in the step (d) is a bean product with single cells having integrated cell walls.

Preferably, the beans are soybeans.

To sum up, the present invention utilizes the first processing tank, the three-in-one functional tank, to carry out soaking, cooking and crushing within one tank. Hot water soaking can help to eliminate the beany flavor of soy, and even if soluble proteins, isoflavone and other nutrients are released in water during soaking, they will not be lost or dissipated in the subsequent cooking step since the processing is carried out in the same tank, hence achieving the purposes of retaining the food nutrition intact and resources fully utilized. At the same time, small and simplified soymilk machine according to the processing method disclosed allows ready to supply of fresh soymilk in local, which could increase the consumption of whole bean soymilk significantly, thereby boosting public health.

Other objects, advantages, and novel features of the invention will become more apparent from the following detailed description when taken in conjunction with the accompanying drawings.

### BRIEF DESCRIPTION OF THE DRAWINGS

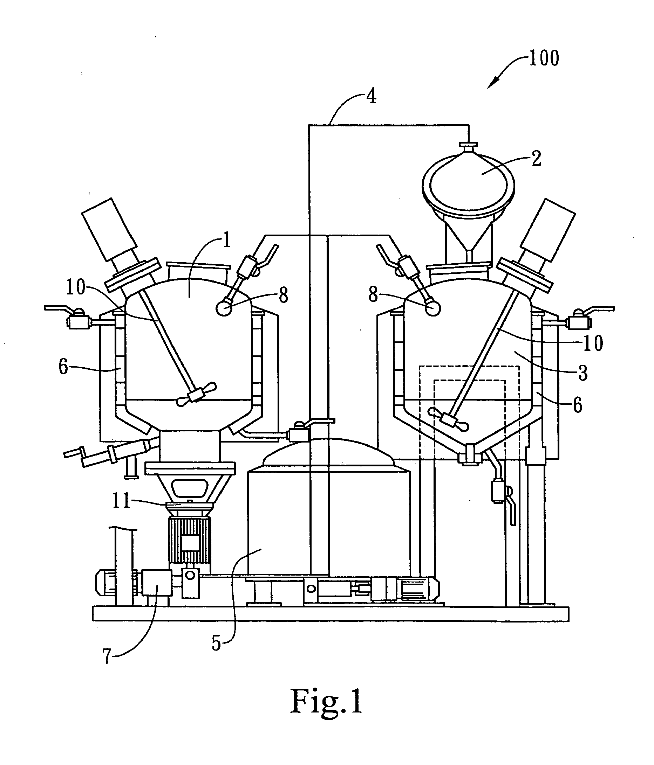

FIG 1 is the structure of the bean-processing device of the present invention.

### DETAILED DESCRIPTION OF THE INVENTION

The present invention relates to a bean processing device that employs the simple steps of soaking, cooking and crushing under atmospheric pressure to produce bean product containing single cells without the use of any enzyme or chemical reagent, and the present invention further provides the method to the manufacture of whole bean soymilk.

With reference to FIG 1, there is shown the structure of the bean processing device of the present invention. The present invention relates to a bean processing device 100 comprising: a first processing tank 1, which comprises a first pulverizer 11, the first processing tank 1 is for loading the beans for soaking, cooking and crushing the beans; a second pulverizer 2, which is applied for fine crushing of the crushed beans in the first processing tank 1; a second processing tank 3, which is connected with the second pulverizer 2, and applied as a holding tank to receive the bean products of the fine crushed beans from the second pulverizer; and a conjunction pipe 4, which is applied for connecting the first processing tank 1 and the second pulverizer 2 to form a airtight automatic processing system.

As shown in Fig. 1, the bean processing device 100 of the present invention further comprises a hot water tank 5 for preheating the water in the hot water tank 5 to 90°C then delivers the water into the first processing tank 1 to shorten the time in softening the cell tissue of beans and maintains the temperature of the first processing tank 1 and the second processing tank 3. Adding water up to 1500L when cooks the beans in the first processing tank 1; and then the outside of the first processing tank 1 is equipped with a jacketed heating plate 6 for heating the beans in the first processing tank 1. keep heating for 30 minutes at 80°C, it is able to reduce the activities of trypsin inhibitor, lipoxygenase, soybean agglutinin and phytic acid and separate the soy single cells easily; the bottom of the first processing tank 1 further connects to a pump 7, the pump 7 circulates the beans from the bottom of the first processing tank 1 up to the top of tank.

The mentioned first processing tank 1 is equipped with an agitator 10; the agitator 10 is used for stirring at the rotating speed of 65 rpm while the beans are cooking homogeneously in the first processing tank. The first pulverizer is mounted at the bottom of the first processing tank 1 for the primary crushing the cooked beans into the slurry. The second processing tank 3 further equips with an agitator 10 and clip heating plate 6, the agitator 10 is used for stirring the beans inside the second processing tank 3 and the jacketed heating plate 6 is used for maintaining a proper temperature of the beans inside the second processing tank 3.

The bean processing device 100 of the present invention further comprises a spraying device 8, which is mounted inside the first processing tank 1 and the second processing tank 3 performing a CIP step immediately after completion of the producing process by adding a cleaning and sterilizing reagent into the hot water tank 5 and pumping the reagent solution into the spraying device 8 for spraying the inside of first processing tank 1 and second processing tank 3 to achieve the function of cleaning and sterilizing. Any cleaning and sterilizing reagents known in the art are able to apply in the present invention but not in limitation.

The first processing tank 1, the second processing tank 3 and the hot water tank 5 further mounted with a heat insulation device (not shown). The heat insulation device is a heat conservative material for keeping the temperature in the first processing tank 1, the second processing tank 3 and the hot water tank 5.

In the present example, the bean of the present invention is soybean. During the bean process by utilizing the bean processing device 100 of the present invention, first, put 330kg of soybean into a washer (not shown), and spray clean it with 40L of cold water to remove impurities. Take water from the hot water tank 5 and preheat to 90°C and then deliver the water to the first processing tank 1. Feed the washed soybean into the first processing tank 1 with a screw conveyor (not shown). Adding the water and then heat to 97°C. Cook the soybean at 95°C for 3 hours under atmospheric pressure and stirring it with an agitator at the speed of 65 rpm to ensure homogeneity. After the soybean tissues are softened to a certain extent, use a 3000 1/hr pump to circulate the soybean from the bottom of tank to the top and then convey the cooked soybean to the first pulverizer 11 (Tyler No. 6 mesh) and crush the soybean into a slurry at 2400 rpm. Then use a jacketed heating plate 6 to continue heating the slurry at 80°C for 30 minutes to greatly reduce the activities of trypsin inhibitor, lipoxygenase, soybean agglutinin and phytic acid and separate the soy single cells easily. Next, after circulating the slurry with a 3000 1/hr pump, use the second pulverizer 2 (Tyler No. 48 mesh, 3600 rpm) to pulverize all constituents in soybean, including hull, hilum, hypocotyls, and cotyledon into granules of predetermined sizes. Subsequently maintain the temperature of the smashed soybean slurry in the second processing tank 3 at 70-80°C to wait for spray drying. Use an spray dryer (not shown) to dry the soybean slurry at the evaporation rate of 440 kg/hr into powder weighing 283kg. The finished product still contains 2-3% moisture. Finally cool the powder under 27°C and pack the powder into aluminum bags at 20 pounds per bag. After bean process, transfer the water in the hot water tank 5, which comprises with the function of cleaning and sterilizing, into the spraying device 8 for spraying the inside of first processing tank 1 and second processing tank 3 to cleaning and sterilizing the tanks.

The present invention also provides a bean processing method, which is applied with the bean processing device 100, comprising: (a) loading beans into a first processing tank; (b) adding the proper amount of the water (preferably, the weight of water is about 3.5-6.0 times of the weight of the bean) into the tank to perform the beans soaking, cooking and crushing process; (c) pumping the primary crushed beans into a second pulverizer for a fine crushing by a conjunction pipe; and (d) conducting the fine crushed beans into the second processing tank for stirring and a bean product with a integrated single cell wall is obtained.

The crushing process in the step (b) is performed by the first pulverizer inside the first processing tank and the cooking process in the step (b) is performed at a temperature of 70-100°C for 3-6 hours. The bean product in the step (d) comprises an integrated single cell wall.

The bean processing of the present invention further comprises a spray-dried step for drying a liquid bean product into a powder product. The first processing tank and the second processing tank are equipped with an agitator, the agitator is used for stirring the bean in the tank.

The bean processing method of the present invention further comprises a CIP step, which is applied immediately after completion of the producing process by adding a cleaning and sterilizing reagent in the hot water tank 5, and pumping the reagent solution into the spraying device for spraying the inside of the first processing tank 1 and the second processing tank 3 for the purpose of cleaning and sterilizing.

The present invention utilizes the three-in-one functional tank to carry out soaking, cooking and crushing. Hot water soaking can help to eliminate the beany flavor of soy, and even if soluble proteins, isoflavone and other nutrients are released in water during soaking, they will not be lost or dissipated in the subsequent cooking step since the processing is carried out in the same tank, hence achieving the purposes of retaining the food nutrition intact and resources fully utilized. At the same time, small and simplified soymilk machine according to the processing method disclosed allows ready to supply of fresh soymilk in local, which could increase the consumption of whole bean soymilk significantly, thereby boosting public health.

Although the present invention has been explained in relation to its preferred embodiment, it is to be understood that many other possible modifications and variations can be made without departing from the spirit and scope of the invention as hereinafter claimed.

## Claims

1. A device for bean processing comprising:
a first processing tank, which comprises a first pulverizer, said first processing tank is for loading beans and for soaking, cooking and crushing said beans;
a second pulverizer, which is applied for fine crushing of said beans, crushed in said first processing tank;
a second processing tank, which is connected with said second pulverizer, and applied as a holding tank to receive bean products of said crushed beans from said second pulverizer; and
a conjunction pipe, which is applied for connecting said first processing tank and said second pulverizer to form a airtight automatic processing system.

2. The device of claim 1, further comprises a hot water tank for preheating the water and then delivering said water into said first processing tank to shorten the time in softening the cell tissue of beans and maintains the temperature of said first processing tank and said second processing tank.

3. The device of claim 2, wherein said hot water tank further comprises a cleaning and sterilizing reagent, which is applied after completion of the producing process, to spray at said first processing tank and said second processing tank by a spraying device mounted inside said first processing tank and said second processing tank for the purpose of the cleaning and sterilizing.

4. The device of claim 1, wherein said first processing tank is equipped with a jacketed heating plate for heating said beans in said first processing tank.

5. The device of claim 1, wherein the bottom of said first processing tank further equipped with a pump, said pump circulates the beans from the bottom of said first processing tank up to said the top of tank.

6. The device of claim 1, wherein said first processing tank is equipped with an agitator, said agitator is used for stirring while said beans are cooking in said first processing tank.

7. The device of claim 1, wherein said first pulverizer is mounted at the bottom of said first processing tank for the primary crushing the cooked beans into the slurry.

8. The device of claim 1, wherein said second processing tank further comprises an agitator for stirring said beans inside said second processing tank and a jacketed heating plate for maintaining a proper temperature of said beans inside said second processing tank.

9. The device of claim 1, wherein said beans are soybeans.

10. A bean processing method, which is applied with the device of claim 1, comprising:
(a) loading beans into a first processing tank;
(b) adding the proper amount of the water into said first processing tank to proceed the bean soaking, cooking and primary crushing process;
(c) transferring said primary crushed beans into a second pulverizer for fine crushing through a conjunction pipe; and
(d) conducting said fine crushed beans into a second processing tank for stirring and a bean product with a integrated single cell wall of bean is obtained.

11. The method of claim 10, wherein said crushing process in said step (b) is performed by said first pulverizer of said first processing tank.

12. The method of claim 10, wherein said cooking process in said step (b) is performed at a temperature of 70-100°C for 3-6 hours.

13. The method of claim 10, which further comprises a spray-dried step for drying a liquid bean product into a powder product.

14. The method of claim 10, which further comprises a CIP step, which is applied after completion of the producing process of bean products, to spray said hot water contained with the cleaning and sterilizing reagent to said first processing tank and said second processing tank for the purpose of cleaning and sterilizing.

15. The method of claim 10, wherein said first processing tank and said second processing tank are equipped with an agitator, said agitator is used for stirring said beans in said tank.

16. The method of claim 10, wherein said bean product in said step (d) comprises a integrated single cell wall of bean.

17. The method of claim 10, wherein said beans are soybeans.
